Europäisches Patentamt

European Patent Office

Office européen des brevets

(19)

(11) Publication number: **0 451 593 A2**

## (12) EUROPEAN PATENT APPLICATION

(21) Application number: **91104675.3**

(22) Date of filing: **25.03.91**

(51) Int. Cl.⁵: **B60K 31/00, B60T 7/12**

(30) Priority: **26.03.90 US 499956**

(43) Date of publication of application:
**16.10.91 Bulletin 91/42**

(84) Designated Contracting States:
**AT BE CH DE DK ES FR GB GR IT LI LU NL SE**

(71) Applicant: **Lin, Yng-Lang**
**2F., No. 17, Lane 49, Chung Hsiao E. Rd., Sec. 1**
**Taipei(TW)**

(72) Inventor: **Lin, Yng-Lang**
**2F., No. 17, Lane 49, Chung Hsiao E. Rd., Sec. 1**
**Taipei(TW)**

(74) Representative: **Lewald, Dietrich, Dipl.-Ing. et al**
**Patentanwälte Deufel, Hertel, Lewald**
**Isartorplatz 6 Postfach 26 02 47**
**W-8000 München 26(DE)**

(54) **Multi-functional and practical vehicle bump-avoiding system.**

(57) The present invention relates to a multi-functional and practical bump-avoiding system, which can replace all the prior art and can avoid bump in view of many causes for vehicle bump and can be practically used without bothering and confusing a driver on a road of more and more complicated traffic condition.

EP 0 451 593 A2

Cross-References to Related Applications

The present invention includes a part of content of application S/N 07/207,782. Some of the content of the above application is deleted and some remains for further application. A complete specification is reprepared. Please consider the original filing date the filing date of the present invention.

Background of the Invention

(1) Field of the Invention:

The present invention provides a multi-functional and practical bump-avoid system, which can replace all the prior art and can avoid bump respecting many causes of vehicle bump and can be practically used without bothering and confusing a driver in a more and more complicated traffic condition.

(2) Description of the Prior Art:

To make the invention trying to avoid bump successful, we should first avoid bump respecting many causes of vehicle bump, and second solve many negative (practical) problems caused by avoiding bump. Neither of these two can be neglected. However, as to conventional vehicle collision-avoiding device, these two are not considered therein. Therefore, only little function is created and the driver is quite bothered and confused and such devices can not be used by the driver, and especially on a road of complex traffic, such devices thoroughly can not be used.

For example, in such conventional devices, (1) they simply "alarm or brake automatically when they sense object" or simply "periodically detect the attention of the driver" and no other design for avoiding bump is developed, and thus their function of avoiding bump is quite limited, and (2) the driver must turn off the power of the collision-avoiding device each time the vehicle is parked and not used, and if he forgets to turn off the power, the battery will be exhausted to quite bother the driver. Therefore, the driver will not use such devices to make such devices work without effect and if the driver forgets to turn on the power after he turns off the same, the device can also work without effect, and (3) the sensing distance of such devices is not divided into several degrees and after a first remote vehicle is detected and another vehicle or person suddenly goes ahead of, the device can not detect this object any more, and moreover, when detecting first vehicle or object, the device will automatically brake until the vehicle is totally stopped without stepped braking to make the driver unable to stand this and use such devices, and (4) such devices can not distinguish if the car is getting closer and closer to an object and it brakes as long as it detects the object so that on a road of complex traffic, the driver will be quite bothered and will not use such device and thus no bump-avoiding effect is produced, and (5) although the driver can shut off the automatic braking function and only use the alarm to remind the driver that a remote object exists, however the alarm can not tell the driver that the vehicle is getting closer and closer to the object, i.e., the alarm can not be enhanced when the vehicle is getting closer to the object, and therefore "the driver is apt to get used to hearing the alarm" to thus make the bump-avoiding effect lost, and (6) when auto-braking the device can not distinguish if the driver is paying his attention, and therefore when detecting a remote object, even the driver is paying his attention, the device will still brake automatically so that when on a road of complex traffic, the driver will be quite bothered and thus the driver will not use the device and no bump-avoiding function is produced, and (7) when the driver chooses to only use the alarm without automatic braking function, if some one suddenly rushes ahead of the vehicle, the device can not brake automatically and increase the braking force automatically so that the bump can not be avoided, and (8) when passing through another vehicle or changing the lane, the device can not be changed to perform another bump-avoiding function, and often detects a remote vehicle or object and automatically brakes, and thereby on a road of complex traffic, the device thoroughly can not be used, and (9) no design positively preventing rearward collision is provided and thereby in case the driver of a rearward vehicle without bump-avoiding device neglects paying attention or keeping the safety distance, the vehicle in front of the rearward vehicle is apt to be bumped by the rearward vehicle, and (10) although some of the prior devices apply warning means detecting the attention of the driver to avoiding bump, however the warning means can not remind the driver to give his attention via words, and thus the warning effect is poor, and, moreover, the power of the warning means can not be automatically turned on or off following the stopping or starting of the vehicle, and the warning means works without distinguishing the inevitable conditions existing when driving a vehicle, (e.g., when passing through another vehicle or changing the lane or backing up the vehicle, the warning will still detect the attention of the driver) so as to cause the driver much trouble, and (11) there is no educational bump-avoiding device which educates the driver with many informations respecting traffic safety at common time, and therefore during driving, the driver is not told much knowledge about traffic safety for achieving the most basic bump-avoiding function, and (12) if the induction distance is to be shortened, the driver must adjust the VR with hand, and although the VR can be adjusted to the desired distance, however, the driver is unable to see where the VR is adjusted to during driving, (and even buttons are used for adjustment, it is still difficult to see which button is pressed during driving), and therefore when on a highway, in case a traffic jam happens like in the downtown area (the vehicle flow is too large), it will be very difficult to adjust the induction distance to a shorter degree, and therefore the driver will have to temporarily shut off the bump-avoiding device and no bump-avoiding effect is produced, and (13) the force of auto-braking can not be enhanced by the driver according to special situation to achieve object of "necessary special bump-avoiding", etc. The applicant recognizes that the above drawbacks exist in the prior art, and therefore costs many years of time with very very cautious and serious attitude to study the problem respecting the aforesaid two items, (i.e., we should avoid bump respecting many causes of vehicle bump, and solve many negative problems caused due to avoiding bump), and finally successfully develops the present invention. (This invention has been tested in a vehicle practically.) The success of this invention can thoroughly eliminate the above shortcomings of prior art, i.e., this invention can thoroughly replace all the prior art to actually avoid bump in many situations and can be used very practically.

Summary of the Invention

It is an object of this invention to provide a multi-functional and practical bump-avoid system, which can replace all the prior art and can avoid bump in view of many causes of vehicle bump and can be practically used without bothering and confusing a driver on a road of more and more complicated traffic so as to solve the above-mentioned drawbacks of the prior art. The features of the system of this invention include a sensor (transmitter/receiver), a brake machine, and auto-circuits for performing the following functions: (1) turning on/off the power, (2) detecting object and braking at different distance stages, (3) distinguishing if the vehicle is quickly getting closer to the object, (4) reminding the driver that the vehicle is vehicle is quickly getting closer to the object, (5) distinguishing if the driver is paying his attention and accordingly braking at a far distance or braking at a near distance or simply alarming and decelerating without braking, (6) auto-braking with greater braking force in case the vehicle is very near to the object, (7) automatically changing the bump-avoiding design into another bump-avoiding design suiting when passing through another vehicle or changing the lane, (8) preventing rear-ward bump, (9) by means of words and according to the necessary driving conditions reminding the driver to attend to safety, (10) educating the driver with relevant traffic safety knowledge timelily, and manually controlled circuits for shortening the sensing distance and increasing the auto-braking force, etc. All these circuits are disposed on a P.C.B. to form the present system.

Brief Description of the Drawing

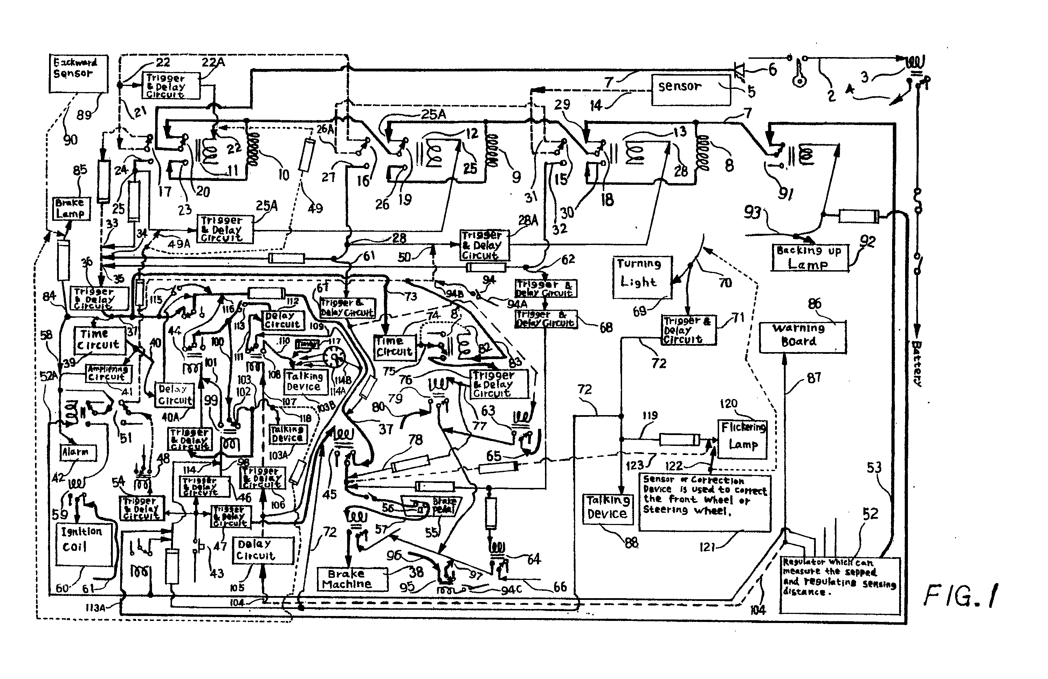

Fig. 1 is a circuit diagram of the present invention.

Detailed Description of the Preferred Embodiments

The hereinafter referred to on/off circuit is a (relay or transistor), capable of closing and opening a circuit, and the hereinafter referred to activating and delay circuit (which is also named "trigger and delay circuit") is a circuit that at common time will be provided with positive and negative electricity and another circuit for activating whereby when the another circuit is provided with electricity short, the activating and delay circuit will then produce some time of output and then stop, and if the output is wanted to be produced again, then the another circuit should be provided with electricity short again, and if the short provided electricity is provided closely, then the output will be produced continuously.

This invention includes a sensor (transmitter/receiver, such as infrared ray transmitter and receiver), and a brake machine, and circuits for automatically performing the following functions: (1) turning on/off the power (first circuit), (2) detecting object and braking at different distance stages (second circuit), (3) distinguishing if the vehicle is quickly getting closer to the object (third circuit), (4) reminding the driver that the vehicle is quickly getting closer to the object (fourth circuit), (5) distinguishing if the driver is paying attention and accordingly braking at a far distance or braking at a near distance or simply alarming and decelerating without braking (fifth circuit), (6) auto-braking with greater braking force in case the vehicle is very near to the object (sixth circuit), (7) automatically changing the bump-avoiding design into another bump-avoiding design suiting when passing through another vehicle or changing the lane (seventh circuit), (8) preventing rearward bump (eighth circuit), (9) by means of words and according to the necessary driving conditions reminding the driver to attend to safety (ninth circuit), (10) educating the driver with relevant traffic safety knowledge timelily (tenth circuit), and includes manually controlled circuits for shortening the sensing distance and increasing the auto-braking force.

The sensor and brake machine pertain to prior art and will not be described herein. Most of the first to tenth circuits are formed by a P.C.B.A housing is used to protect the P.C.B. While some circuits are connected with outer portions via cable. First circuit via the electricity 2 controlled by key 1 starting engine controls an on/off circuit 3 (such as relay or transistor). The on/off circuit 3 then turns on the power 4 of the bump-avoiding system. Consequently, when the driver turns the key, the power of the bump-avoiding system will be simultaneously turned on so that it will never happen that the driver forgets to turn on the power to lose the bump-avoiding effect. Moreover, when the vehicle is parked and the key is pulled out, the power is automatically turned off so that the driver does not need to turn off the power with his hand and no trouble is caused.

The second circuit is designed to divide the electricity 7 for transmission of the transmitter 6 (such as infrared transmitter) of the sensor 5 into reduced electricity and non reduced electricity. The reduced electricity is reduced in sequence by several reducing circuits 8, 9, 10 (such as) so that the sensor can sense at several distance stages by means of the reduction of electricity. The reducing circuits are controlled respectively by controlling circuits 11, 12, 13 (such as relay or transistor). The controlling circuits further control the output produced by the sensor when detecting object alternatively in a rearward sequence and then provide a brake machine with the output for producing braking effect (hereinafter referred to as auto-braking). The controlling circuits works and performs the alternatively controlling function in such a manner that the output circuit 14 of the sensor at common time outputs through connecting the second group of controlling portions 15, 16, 17 of the controlling circuits in series, while the non reduced electricity of the electricity for transmission of the transmitter at common time outputs through connecting in series with the first group of controlling portions 18, 19, 20 of the controlling circuits. When the sensor senses a remote object and first output, besides the output is provided for the braking machine to brake through a first output circuit 21, the output further provides first controlling circuit of the controlling circuits with electricity 22 for producing controlling effect. At this time, the first controlling circuit work for a period of time and the first group of controlling portions will interrupt the non reduced electricity of the electricity for tranamission and alternatively a first reducing circuit 23 of the several reducing circuits will provide the electricity so as to perform first stage of reducing, and the second group of controlling portions at the same time interrupts the output circuit (the first output circuit) of the sensor and alternatively second output circuit 24 another output of second group of controlling portions of (the first controlling circuit) will be connected to output. At this time, the electricity for transmission is reduced by the first reducing circuit, making the sensing distance of the sensor shortened for a stage, and thus the remote object will not be detected to stop the first output. However, in case the vehicle goes forward for some distance, the sensor further detects the object and produces second output. The second output is not only provided for brake machine to brake via the second output circuit 24 but also provides the second controlling circuit with electricity 25 for producing controlling effect. At this time, the second controlling circuit will work for some time and the first group of controlling portions will interrupt the non reduced electricity for transmission 25A between the first and second reducing circuits and alternatively connect with the second reducing circuit 26 to perform a further stage of reducing, and the second group of controlling portions simultaneously interrupts the output circuit 26A of the sensor between the first and second reducing circuits and alternatively connects with a third output circuit 27 (another output of the second group of controlling portions of the second controlling circuit). At this time, since the electricity for transmission is reducd by the first and second reducing circuits, therefore the sensing distance of the sensor is further shortened for some distance and the sensor thus will not detect the remote object and thus the second output is stopped. In case the vehicle again goes forward for some distance and the sensor again senses the object to produce third output, then the third output is not only provided for the brake machine to brake through the third output circuit 27 but also provides the third controlling circuit 13 with electricity 28 for producing controlling effect. At this time, the third controlling circuit will work for some time and the first group of controlling portions will interrupt the non reduced electricity for transmission 29 between the second and third reducing circuits and alternatively connect with the third reducing circuit 30 to perform third stage of reducing, and the second group of controlling portions simultaneously interrupts the output circuit 31 of the sensor between the second and third reducing circuits and alternatively connects with a fourth output circuit 32 (another output of the second group of controlling portions of the third controlling circuit). At this time, since the electricity for transmission is reduced by the first, second and third reducing circuits, the sensing distance of the sensor is further shortened for a stage of distance and the sensor again can not detect the object and the third output stops. If again the vehicle forwards for some distance, the sensor will again sense object to produce fourth output. (If more stages of sensing and braking is desired, then by means of the fourth output and according to the above rearward alternative manner, several more reducing circuits can be disposed.) Between the first output circuit 21 and the first controlling circuit, an activating and delay circuit 22A is provided so that the electricity 22 provided by the first output circuit 21 for the first controlling circuit to produce controlling effect must go through the activating and delay circuit 22A, and between the second output circuit 24 and the second controlling circuit, an activating and delay circuit 25A is provided so that the electricity provided by the second output circuit 24 for the second controlling circuit to produce controlling effect must go through the activating and delay circuit 25A, and between the third output circuit 27 and the third controlling circuit, an activating and delay circuit 28A is provided, so that the electricity provided by the third output circuit 27 for the third controlling circuit to produce controlling effect must go through the activating and delay circuit 28A. As a result, when the controlling circuits are provided with electricity, they will not only work immediately but also will work for a period of time. After this period of time, the electricity for transmission will be restored to original strength. This period of time is decreased from the first controlling circuit to third controlling circuit in sequence, i.e., the reducing circuit reducing more has shorter reducing time and will restore quicker (the one reducing most has shortest reducing time and thus the more close to the object the vehicle is, the more frequently the sensor intermittently detects to make the brake machine brake and thus the bump-avoiding effect is better. Because the second, third and fourth output circuits respectively connect with the first output circuit at appropriate positions 33, 34, 35, therefore if the vehicle is keeping getting closer to the object, then different distance stages of brake happen. To compensate out-put times of first to fourth output circuits shortened due to the reducing of the electricity for transmission, after the four output circuits joint together, an activating and delay circuit 36 will be first activated to produce some time of output 37. The output will make brake machine brake. Thus the braking time of the brake machine will be longer than the first through fourth output times.

The third circuit is designed to send the output 37 of the activating and delay circuit 36 to a timer circuit 39 for calculating the time of output 37. When this time reaches a certain value, the timer circuit 39 will then produce output 40. The output 40 will make the brake machine automatically brake. In this way, it can be distinguished if the vehicle is quickly getting closer to the object by reason that the activating and delay circuit must be activated by continuous output of at least two of the first through fourth output circuits for the timer circuit to calculate if the time of the output 37 has reached the predetermined value and the continuous output will be produced only when the vehicle is quickly getting closer to the object. The output of the timer circuit is prolonged by a delay circuit 40A to thereafter perform auto-braking so that the short output 37 of the activating and delay circuit can be compensated.

While the fourth circuit is designed to via the output 37 of the activating and delay circuit make an amplifying circuit 41 work and produce output which makes an alarm 42 emit louder alarm sound to notice the driver that "the vehicle is quickly getting closer to the object".

The design of the fifth circuit includes a switch 43 for the driver to press to express his attention. This switch 43 can control the working of several on/off circuits so as to prevent the brake machine from braking. For example, a first on/off circuit 44 of the several on/off circuits can control the output 37 of the activating and delay circuit 36, and a second on/off circuit 45 can control the output 40 of the timer circuit 39. By means of the designs 43, 44, 45, when the driver himself thinks that he is paying attention and wants to prevent the sensor from auto-braking due to its sensing the remote object, or when the driver knows that the vehicle only just gets near the object but is not quickly getting closer to the object and he wants to prevent the auto-braking, in these two conditions, the driver only needs to press the switch 43 to notice the bump-avoiding system that he is paying attention, and the first on/off circuit will shut off output 37 and the second on/off circuit will shut off the output 40 to prevent auto-braking. The output 40 will restore automatically after some time by reason that between first on/off circuit and switch 43 is disposed an activating and delay circuit 46 and between second on/off circuit and switch 43 is disposed an activating and delay circuit 47, and because before the activating and delay circuit 47 is activated, a delay circuit must first work, therefore the time of producing effect is of the delay circuit 47 is slightly later than the time of producing effect of the activating and delay circuit 46 and therefore when the driver thinks that the vehicle is not quickly getting closer to the object and auto-braking is unnecessary, he must press the switch slightly harder (the harder he presses the switch, the longer the electricity for activating the circuit 47 is provided). The driver only needs to slightly touch the switch 43 to make the activating and delay circuit 46 work. Therefore, the driver can distinguish these two conditions and decide which should be controlled. Moreover, in the fifth circuit, the switch 43 also controls the working of third on/off circuit 48 of the several on/off circuits. This working will make the first through third reducing circuits work, i.e., the third on/off circuit 48 provides the controlling circuits 11, 12, 13 with necessary electricity 49, 49A, 50. When driving in a downtown area or meeting a traffic jam, since the distance between two vehicles is quite short, at this time if the driver presses once the switch 43 to express his attention, then the first through third reducing circuits will work at the same time to make the sensing distance of the sensor greatly shortened. However, the electricity 49, 49A, 50 privided for the controlling circuit to work is controlled by an on/off circuit 51, and the electricity 52A for the on/off circuit 51 to work is provided by a regulator 52 which can measure the speed and regulating sensing distance. Therefore, when the vehicle is running in a suburban area or the traffic jam is eliminated, since the vehicle speed becomes great, the regulator will output to make the on/off circuit 51 shut off the electricity 49, 49A, 50. Therefore, pressing the switch 43 will not make the first through third reducing circuits work. (The regulator 52 pertains to prior art. It can measure the vehicle speed and follow the same to produce strong or weak electricity 53 to provide the electricity 7 for transmission. When the vehicle stops, the output of the regulator is zero.) The third on/off circuit 48 will work for some time by reason that between the third on/off circuit 48 and the switch 43 is disposed an activating and delay circuit 54. The fifth circuit further includes a switch 56 disposed on the brake pedal 55. The switch 56 is used to control a braking circuit 57 which makes the brake machine brake and conncets with the outputs 37, 40. Therefore, when the driver is paying attention and stepping the brake pedal, the switch 56 can interrupt the braking circuit 57 and prevent auto-braking. The design of the fifth circuit further includes that the output 37 of the activating and delay circuit 36 not only makes the alarm 42 sound once 58 but also makes a timer circuit 59 work to turn off the power of the ignition coil 60 of the vehicle, making the ignition stop for several times, making the vehicle decelerate for several times. Thus, although the driver thinks that the above two conditions exist and presses the switch 43 to prevent auto-braking, the alarm or deceleration will still take place to remind the driver so that in case the driver after pressing the switch 43 sees left or right without seeing the object ahead of the vehicle, the alarm and deceleration will still produce bump-avoiding effect.

The design of sixth circuit includes that the third and fourth output circuits 27, 32 respectively connect two circuits 61, 62 to perform auto-braking, and the two circuits 61, 62 further make on/off circuits 63, 64 make the electricity 65, 66 for enhancing the braking force of the brake machine. Therefore, when the driver thinks that the above two conditions exsit and presses the switch 43 to prevent auto-braking, if some one or some vehicle suddenly rushes ahead, then the third or fourth output circuits will still make auto-braking and enhance the braking force of the auto-braking to avoid bump. Between the third output circuit and the brake machine and between the fourth output circuit and the brake machine are disposed respectively two activating and delay circuits 67,68 so that the auto-braking will continues for a certain time and then stops.

The design of the seventh circuit includes that by means of the electricity 70 lighting up the turning light 69 or by means of the switch lighting the turning light, an activating and delay circuit 71 is made work to produce output 72 which makes the second on/off circuit 45 of the several on/off circuits work to interrupt the output 37 of the activating and delay circuit 36 and the output 40 of the timer circuit 39 so that when passing through another vehicle or changing the lane, if the sensor detects a remote vehicle or object, the auto-braking will not be performed in far distance condition to meet the requirement for passing through another vehicle or changing the lane. Although when passing through another vehicle or changing the lane, the driver often will pay his attention and the auto-braking is not necessary to be performed in far distance condition, however, for caution's sake, to avoid bump due to the driver's negligence when passing through another vehicle without finding the remote object, the output 37 of the activating and delay circuit 36 activated by the first through third output circuits is particularly connected with a circuit 73 so that another timer circuit 74 can calculate the time of the output 37. If this time is calculated by the timer circuit 74 to reach a certain value, (i.e., the first through third output circuits successively output) it is indicated that the vehicle is keeping going near to the remote vehicle or object and the bump is possible. At this time, the timer circuit 74 will produce output 75 which then activates an activating and delay circuit 76. The activating and delay circuit 76 then produces output 77 which not only makes auto-braking 78 but also makes an on/off circuit 79 make the electricity 80 for enhancing the braking force of the brake machine so as to enhance the braking force. Therefore, when passing through another vehicle or changing the lane, if the driver neglects and does not find the remote vehicle or object and is keeping getting closer thereto, the designs 73, 74, 76, 78, 79, 80 can not only perform auto-braking but also enhance the braking force of the auto-braking to avoid bump. However, if this auto-braking has made the driver find the vehicle or object and become to pay his attention, and the driver thinks that the auto-braking is unnecessary to continue, he only needs to slightly touch the switch 43 to thus stop the auto-braking. This happens because that the output 75 of the timer circuit is controlled by an on/off circuit 81, and the positive/negative power 82, 83 for the on/off circuit to work is provided by the output 75 of the timer circuit and the switch 43. This design is arranged for that if the vehicle is keeping getting closer to the vehicle or object, the auto-braking must first take place, and then if the driver is paying his attention, the auto-braking will be thus released. Therefore, although for meeting the need for passing through another vehicle or changing the lane, the driver can light the turning light to make the second switch 45 shut off outputs 37, 40 so as to prevent auto-braking in far distance condition, however, if when passing through another vehicle or changing the lane, the driver neglects and does not find the remcte vehicle or object, the auto-braking will be still performed to avoid bump.

The design of eighth circuit includes that the output 37 of the activating and delay circuit 36 is connected with a circuit 84 to provide the electricity for a warning lamp (such as a flickering lamp) or the brake lamp of vehicle to light so that when the vehicle is keeping getting closer to the object and before the timer circuit 39 or 74 outputs to make auto-braking, the first and second output circuits will first output to make the warning lamp or brake lamp light to pre-warn the rearward vehicle (so as to warn the rearward vehicle earlier than the driver's braking action) to avoid being bumped by the rearward vehicle. The eighth circuit further includes a warning board 86 disposed on the back portion of the vehicle, which at common time pre-warns the rearward vehicle that "this vehicle will auto-brake and please don't follow too close". Therefore the rearward vehicle at common time will be cautious and if the front vehicle automatically brakes, the rearward vehicle will not collide the front vehicle by reason of the already established caution. The warning board is provided with displaying words having fresh color and at night a light is used to illuminate these words to make these words apparent. The light is provided with electricity 87 by the regulator 52 so that the light is turned on or off following the starting or stopping of the vehicle. The design of the eighth circuit further includes that by means of the output 72 of the activating and delay circuit 71, a talking device 88 is made to say "please with attention check if there are vehicles running on the left and right lanes". Therefore, when passing through another vehicle or changing the lane if the driver only lights the turning light without checking if there are vehicles on the left or right lane (this is a bad habit some drivers have), these words are quite with reminding effect and can avoid rearward bump. The eighth circuit further includes a sensor 89 disposed on back portion of the vehicle, which can detect the rearward vehicle. The output 90 of the sensor can make the warning lamp 85 or the brake lamp lighted so that when the rearward vehicle goes too near the front vehicle, the warning lamp or brake lamp will be lighted to warn the rearward vehicle not to go too near so that the rearward vehicle is always forced to keep a safety distance from the front vehicle to avoid rearward bump.

The manually controlled circuit used to shorten the sensing distance by means of a switch 94 makes electricity 94A to provide the first, second and third controlling circuits with electricity 94B for working so as to make the electricity 7 for transmission reduced by the first, second and third reducing circuits to a very small value. Therefore, when the vehicle flow is large and the vehicle can run fast with not large distance between two vehicles (or in a certain condition), the switch 94 can be switched on to shorten the sensing distance of the sensor to a very small value (it is not available to use V.R. or other manners to adjust the electricity for transmission by reason that the driver can't do the adjustment when driving, and therefore the designs 94,94A,94B are necessary).

The manually controlled circuit for enhancing the auto-braking force by means of a switch 94C controls the working of an on/off circuit 95 which is used to make electricity 96 which is used to enhance the braking force 97 of the brake machine so that when the driver deems in some conditions that it is necessary to enhance the auto-braking force, he can switch on the switch 94 (because the brake machine consumes great current, thus if a transformer is used, the driver is unable to adjust the transformer when driving as necessary, and if the switch 94 is used, the driver only needs to switch on the switch without doing any adjustment). Because that when the driver has good spirit and the sight is clear, the auto-braking force should be lighter to prevent bothering the driver, therefore the enhancing designs 94, 95, 96 are necessary, i.e., when the driver is tired or the sight is unclear, he can switch on the switch 94 to enhance the auto-braking force.

The design of ninth circuit includes that the output 98 of the activating and delay circuit 46 does not directly provide the first on/off circuit 44 with electricity for working but through an on/off circuit 99 provides the electricity therefor. The on/off circuit 99 is used to make a circuit 100 to provide the first on/off circuit 44 with electricity for working 101. It is the object of going through the on/off circuit 99 to remind the driver to regularly press the switch 43 so as to answer the bump-avoiding system that the driver is paying attention. The reminding is accomplished in such a manner that the circuit 100 is first connected with an output 102 outputting at commom time of the on/off circuit 99 and at the position, a circuit 103 is connected to make a talking device 103A talk. If the driver presses the switch 43, the on/off circuit 99 will work to interrupt the output 102 and alternatively connect the circuit 100 with the electricity 101 so that if the driver forgets to press the switch 43, the talking device 103A will immediately ask the driver that "Hello! Are you paying attention? Why didn't you answer me?". To make the driver more care for the safety all the time, another talking device 103B will talk to the driver slightly after the vehicle starts that "you should always care about the safety and regularly answer me." However, to avoid bothering the driver, the talking device 103B will talk slightly after the vehicle starts, and after it talks (about six seconds), if the driver does not press the switch 43 to answer it, the talking device will then ask the driver. Therefore, when a traffic jam happens and the vehicle stops and starts frequently, the talking devices 103A, 103B will not talk by reason that besides the electricity for the talking devices 103A, 103B to work is controlled the output 104 of the regulator 52, the output 104 must be delayed by a delay circuit 105 first to then make an activating circuit 106 produce output 107 which makes an on/off circuit 108 work once so as to make a circuit 109 "going through behind the delay circuit 105" and first provide the talking device 103B with electricity for working 110 to make the talking device 103B talk and then when the work stops, the electricity 109 is alternatively sent to another delay circuit 111,112 to be delayed for some time (about six seconds) and then sent to the circuit 100. At this time, if the driver does not press the switch 43, the talking device 103A will then ask. Because the circuit 100 is controlled by a switch 113, therefore if the driver in some conditions don't want to let the talking device 103A ask, he can switch off the switch 113. Moreover, because the electricity 93 for lighting up a backing up lamp 92 and the output 72 of the activating and delay circuit are connected with the electricity 113A, 114 for the on/off circuit 99 to work, therefore when passing through another vehicle or changing the lane or backing up, it is just like that the driver has pressed the switch 43 and thus the talking device 103A will not ask so as not to bother the driver.

The tenth circuit by means of a device 114A auto-rotating to respectively connect with and make every circuits automatically regularly respectively connects with and makes every circuits to make the talking device 103B speak out different important knowledges about the driving safety at different times so as to educate the driver to make he previously take care so as to avoid bump as carefully as possible. The power 114B of the device 114A auto-rotating to respectively connect with and make every circuits is provided by the electricity 109.

The following is a supplemental description of the present invention:

(1) Because the output 37 of the activating and delay circuit 36 is made by another switch 115, therefore if the driver in some conditions thinks that no matter whether he has answered that he is paying attention or not, the sensor should auto-brake once detecting a remote object, he only needs to switch on the switch 115.

(2) Because the circuit 100 in addition through the on/off circuit 44 connects with the output 116 of the activating and delay circuit 36, thus if the driver does not press the switch 43 to answer that he is paying attention and is thus asked by talking device 103A, thereafter the brake machine will still brake so that besides the driver will be made more cautious and always pay attention to the safety, in case the sensor 5 fails, the bump-avoiding effect will still exist.

(3) A timer circuit 117 will regularly provide the talking device 103B with electricity so that the talking device 103B will regularly remind the driver to care about the safety.

(4) The eighth circuit further includes that the circuit 103 is connected with another circuit 118 to make the warning lamp 85 or the brake lamp lighted. This produces considerable effect of preventing rearward bump by reason that the circuit 103 will output only when the driver is not paying attention and does not press the switch 43 and since he is not paying attention, it will be necessary to precaution the rearward vehicle to take care.

(5) The eighth circuit further includes that the output 72 of the activating and delay circuit is in addition connected with a circuit 119 to make a flickering lamp 120 disposed on left or right edge of the top portion of the vehicle flicker so that when passing through another vehicle or changing the lane, the vehicles running on the left or right lane are more made cautious to avoid rearward bump, especially in case the turning light fails.

(6) The eighth circuit further includes that a sensor or other correcting devices 121 are used to correct the deflection degree of the vehicle front wheels or the steering wheel. If the deflection degree reaches a certain value, the sensor or other correction devices will then produce output 122 which makes the turning light or the flickering lamp flicker so that even the driver forgets to light up the turning light before passing through another vehicle or changing the lane, the vehicles running on the left or right lane will still be cautioned to avoid rearward bump.

(7) The eighth circuit further includes that the brake circuit 56 is also connected with a circuit 123 to make the flickering lamp flicker so that in case the brake lamp of the vehicle fails, the flickering lamp will still flicker to caution the rearward vehicle.

(8) The talking devices 103A,103B apply the current word IC to store various sets of words (including the words said by the relatives and friends for reminding the driver). As to the manner in which the words are stored, since it pertains to prior art, the description thereof is omitted.

(9) The timing of the timer circuit 74 is longer than the timing of the timer circuit 39 so that the timer circuit 74 will output only when the first, second and third output circuits successively output, while the timer circuit 39 will output as long as the first and second output circuits seccessively output.

(10) In Fig.1, the symbol " " represents an diode.

To make the Examiner easily realize many causes for vehicle bump and understand how this invention provides bump-avoiding effect in view of these causes, the applicant now makes the following description:

1. Because when the traffic is complex (such as in downtown area or a traffic jam happens), it often takes place that some one or some vehicle suddenly rushes into the room between a vehicle and another vehicle in front thereof so that the vehicle often can not react in time to cause a bump. Respecting this kind of bump, it is avoided in such a manner that at one stage of the several sensing stages of the second circuit of this invention, the suddenly rushing into person or vehicle is sensed to make one output circuit perform auto-braking to avoid bump.

2. Because the rear vehicle does not know that the front vehicle is keeping getting closer to an objects, therefore when the front vehicle suddenly finds the object and brake, the rear vehicle often can not react in time to bump the front vehicle. This kind of bump is avoided by means of the design that output 37 of the eighth circuit of the present invention is also connected with a circuit 84 to provide the warning lamp 85 with electricity so that when the front vehicle is keeping getting closer to the object, before braking, the warning lamp will be lighted to previously warn the rear vehicle to prevent the rear vehicle from bumping the front vehicle.

3. The bump takes place quite often by reason that the rear vehicle does not keep the safety distance. This kind of bump is avoided by means of the design that the warning board 86 of the eighth circuit of this invention always warns the rear vehicle that "this vehicle will auto-brake and so please don't follow this vehicle too close", and the sensor 89 will make the brake lamp light if the rearward vehicle follows too close. These two kinds of warning can make the rear vehicle always cautious and keep the safety distance to avoid bump.

4. The vehicle is quite often bumped by the vehicles running on the left or right lane by reason that when passing through another vehicle or changing the lane, the driver often only lights the turning light without noticing the vehicles running on the left or right lane. This kind of bump is avoided by means of the design that the talking device 88 of the eighth circuit of this invention when passing through another vehicle or before changing the lane will say to the driver that "please note if there are vehicles running on the left or right lane" so as to make the driver notice the vehicles to avoid bump.

5. The rear vehicle often bumps the front vehicle or other object by reason that the driver of the front vehicle does not carefully drive so that when danger suddenly happens, he will urgently brake or abnormally drive. This kind of bump is avoided by means of the design that the electricity 103 is connected with another circuit 118 and when the driver is not paying attention, the another circuit 118 will make the warning lamp or brake lamp light to make the rear vehicle cautious to avoid bump.

6. The rear vehicle often bumps the front vehicle by reason that the driver thereof does not notice that the front vehicle is lighting the turning light, or by reason that the turning light of the front vehicle fails. These two kinds of bump are avoided by means of the design that the output 72 is in addition connected with a circuit 119 to make the flickering lamp 120 flicker so that when passing through another vehicle or changing the lane, the rear vehicle is made more cautious, especially even when the turning light fails.

7. The front vehicle is often bumped by the rear vehicle by reason that the front vehicle forgets to light the turning light when passing through another vehicle or changing the lane. This kind of bump is avoided by means of the design that the sensor or other correction devices 121 are used to cerrect the deflection degree of the vehicle front wheels so that if the driver forgets to light the turning light, the turning light or the flickering lamp will still be lighted to caution the rear vehicle and avoid bump.

8. The front vehicle is possible to be bumped by the rear vehicle due to braking lamp failure. This kind of bump is avoided by means of the design that the brake circuit is connected with a circuit 123 to make the flickering lamp flicker so that when the braking lamp of the front vehicle fails, the rear vehicle is still made cautious to avoid bump.

9. The bump caused by reason that the driver does not carefully drive or the driver dozes when driving quite often happens. This kind of bump is avoided by means of the design that the tenth circuit is designed to with words make the driver always pay attention to the safety after the vehicle starts and, if the driver is not paying attention (does not press the switch 43), the tenth circuit further with words asks the driver if he does not pay attention. The two paragraghs of words are produced as if they are said by a man beside the driver, who reminds the driver to always pay attention. Moreover, if the driver still does not pay attention after he is asked, the circuit 116 will then perform auto-braking to make the driver keep in mind with caution that if he does not pay attention, the auto-braking will be performed. By means of these two paragraghs of words making the driver cautious, the driver will naturally always pay attention and will not be so apt to doze and the bump can be thus avoided. In addition, since the designs 43, 44, 45 of the fifth circuit for the driver to express that he is paying attention to prevent auto-braking performed in far distance condition can make the driver keep in mind that he must always pay attention to prevent auto-braking performed in far distance condition, the driver will thus always pay attention to thereby avoid bump caused by that the driver does not pay attention or the driver dozes.

10. The bump caused by that the driver possesses no traffic safety knowledge also takes place frequently. This kind of bump is avoided by the design that the eleventh circuit will make the talking device 103B speak out some knowledge about driving safety to often educate the driver to make the driver previously know how to attend to the safety to avoid bump.

The above various bumps caused by various causes can be avoided by means of the present invention while all the prior art can not avoid the above bumps.

To make the Examiner easily understand many negative problems (practical problems) caused by avoiding bump in prior art and how this invention solves these negative problems, the applicant now makes a description as follows:

1. All the prior bump-avoiding devices are not designed to automatically turn on or turn off the power of the device. Therefore, each time the driver stops the vehicle and leaves the vehicle, he must turn off the power of the device, or the battery of the vehicle will be exhausted to cause the driver quite much trouble. While the present invention includes the first circuit capable of automatically turning on or off the power so that no such trouble will be caused.

2. All the prior bump-avoiding devices are not designed with several stages of sensing distances and therefore once they detect object, they will auto-brake until the vehicle stops. Thereby, the driver will not stand this and should quickly turn off the power each time they auto-brake. This further considerably bothers the driver. While the present invention includes the second circuit and can automatically sense at several stages of sensing distances so that no such trouble will be caused.

3. All the prior bump-avoiding devices can not distinguish if the vehicle is keeping getting closer to the object and once they detect the object, they auto-brake. Therefore, on a road of complex traffic, especially in downtown area or when traffic jam happens, the driver will be quite bothered. While the present invention includes the third circuit and can automatically distinguish if the vehicle is keeping getting closer to the object and therefore will not cause such trouble.

4. All the prior bump-avoiding device can not distinguish if the driver is paying attention and once they detect the remote object, they automatically brake so that the driver will be also quite bothered. While the present invention includes the fifth circuit and can distinguish if the driver is paying attention and if the driver is paying attention, it will not happen that once it senses the remote object, it auto-brakes. Therefore such trouble will not be caused.

5. All the prior bump-avoiding devices include no design for avoiding bump when passing through another vehicle or changing the lane and therefore when passing through another vehicle or changing the lane, they often detect the remote vehicle or object and auto-brake and thus cause the driver much trouble. While the present invention includes the seventh circuit and it will not happen that the present invention will auto-brake once it senses the remote vehicle or object and no such trouble will be caused.

From the items of the above two special descriptions, it can be obviously seen that the present invention in deed can in view of many causes for vehicle bump avoid bump, and can solve the above-mentioned many negative (practical) problems and is greatly advantageous over all the prior art and can thoroughly replace all the prior art.

The effect of the present invention has been proved to be very good by the applicant with the test wherein it is actually mounted on the vehicle and it is believed that the present invention can thoroughly replace all the prior art.

The using manner of the present invention is as follows:

since only the manually controlled circuits for shortening the sensing distance and enhancing the auto-braking force and the switches 113, 115 are turned on or off by the driver in consideration of necessary conditions, the other designs are all controlled automatically. Therefore, except pressing the switch 43 to indicate the present system that the driver is paying attention, the driver does not need to do any other operation. Therefore, the using manner of the present invention is quite simple.

## Claims

1. A multi-functional and practical vehicle bump-avoiding system characterized by that said system is formed by a sensor, a brake machine, the first, second, third, fifth, sixth, seventh, eighth, ninth and tenth circuits, a manually controlled circuit for shortening detecting distance, and a manually controlled circuit for enhancing auto-braking force, and the designs 3, 4, 5 etc.of the supplemental description.

2. A vehicle bump-avoiding system capable of detecting object at several stages, characterized by that: (a) electricity 7 provided for transmitter portion (or receiver portion) of said sensor 5 to work is divided into non reduced electricity and electricity reduced by a reducing circuit(such as coil or resistor or diode 8), (b) said two kinds of electricity are distinguished by a controlling circuit (such as a relay or transistor 11), (c) electricity for said controlling circuit to produce controlling effect is divisionally provided by an output 21 produced by said sensor 5 when detecting an object, (d) said divisional provision goes through an activating and delay circuit 22A so that said controlling circuit can work for a period of time, and according to said features (a), (b), (c), (d), when said output 21 is produced, right away said controlling circuit 11 is made to alternatively make said electricity 7 for said transmitter (or receiver) portion provided by said reducing circuit so that the detecting distance of said sensor 5 will be shortened for a stage and such shortening will be performed for some time, and if the vehicle further moves forward through some distance, said sensor 5 will then again detect the object to achieve object of detecting at several stages of distances, (e) several above features (a), (b), (c), (d) are provided, (i.e., several reducing circuits and controlling circuits and activating and delay circuits are provided), and each controlling circuit includes two groups of controlling portions (two pairs of outputs), one of which is used to distinguish said two kinds of electricity and the other of which is used to distinguish if the output 21 is in series connected or is interrupted and alternatively connected with additional circuits 24, 27, 32 to be output, and, moreover, another circuit 25, 28 is divided from the output to provide the next controlling circuit with electricity for producing controlling effect, and by means of the above features (a), (b), (c), (d), (e), said sensor can detect object at more stages of distances.

3. A system as claimed in claim 2, wherein said output 21 is used to make an alarm 42 and said brake machine 38 work, but said output 21 first makes the activating and delay circuit 36 work to produce output 37 for some time, and the output 37 then makes said alarm and brake machine work.

4. A system as claimed in claim 2, wherein said additional circuits 24, 27, 32 all connect with said output 21 to achieve the object of alarming or braking at several stages to avoid bump.

5. A system as claimed in claim 2, wherein among said several activating and delay circuits, at least the last one has shortest delaying time so that when the electricity for the transmitter (or receiver) portion is reduced most, the electricity is also reduced for shortest time.

6. A vehicle bump-avoiding system capable of automatically distin guishing if a vehicle is keeping getting closer to an object, characterized by that a sensor 5 is designed to detect object at several stages of detecting distances and by means of the output 37 produced when said sensor detects object at several stages, a timer circuit 39 is made to calculate how long the output 37 is produced, and when the output time reaches preset value, it is indicated that the vehicle is keeping getting closer to the object and then the timer circuit will produce output 40 and by means of the output 40, said alarm or brake machine is made to produce effect.

7. A vehicle bump-avoiding system capable of automatically distin guishing if a vehicle is keeping getting closer to an object, characterized by that the output 37 is made to make the activating and delay circuit 39 produce output 40 which makes said alarm or brake machine produce effect.

8. A bump-avoiding system as claimed in claim 7, wherein between said output 40 and said alarm, an amplifying circuit 41 is disposed and said output 40 first goes through said amplifying circuit 41 and then make said alarm emit sound so that said can emit louder sound to remind the driver.

9. A bump-avoiding system capable of automatically distinguishing if the driver is paying attention and dividing auto-braking into three conditions: auto-braking in far distance condition, auto-braking in near distance condition, and only alarming without auto-braking, characterized by that the designs of the fifth circuit are used to constitute said system.

10. A vehicle bump-avoiding system wherein although in case the driver is paying attenton, it will not happen that once a remote object is detected, the auto-braking is performed, however, if the vehicle is very close to the object, the auto-braking will surely be performed, characterized by that the sensing distance of the sensor 5 is divided into several stages to detect object and at least the stage with shortest sensing distance among these several stages will produce output 62 when detecting object so as to make the brake machine brake.

11. A bump-avoiding system as claimed in claim 1, wherein said third and fourth output circuits 27, 32 respectively in addition connect with circuits 61, 62 so as to make the brake machine brake.

12. A bump-avoiding system as claimed in claim 11, wherein at least one of said circuits 61, 62 makes the on/off circuit 64 work to make a circuit enhancing the braking force of the brake machine so that the brake machine will brake with greater braking force automatically.

13. A bump-avoiding system as claimed in claim 11, wherein between the additional circuits 61, 62 and the brake machine, two activating and delay circuits 67, 68 are disposed so as to make the brake machine brake for some time.

14. A vehicle bump-avoiding system wherein when passing through another vehicle or changing the lane, it will not happen that once a remote object is detected, the auto-braking is performed , characterized by that by means of the electricity or switch for lighting the turning light, the on/off circuit 45 (such as relay or transistor) is made to work to interrupt the brake circuit which will auto-brake when detecting a remote object, and between the electricity lighting the turning light and said on/off circuit 45, an activating and delay circuit is disposed.

15. A vehicle bump-avoiding device capable of reminding the driver to take care of the vehicles running on the left or right lane when passing through another vehicle or changing the lane, characterized by that by means of the electricity or switch lighting the turning light, a talking device is made to speak out words reminding the driver to notice said vehicles running on the left or right lane to prevent said vehicle from being bumped by the same.

16. A vehicle bump-avoiding device used when a driver forgets to light turning light when passing through another vehicle or changing the lane, characterized by that a sensor or other correction device 121 is used to correct the deflection degree of the vehicle front wheels or steering wheel whereby if it is found that the deflection degree of the front wheels or steering wheel has reached a certain value, the sensor or the correction device 121 will produce output to make the turning light (or warning light) light so as to avoid being bumped by rear vehicle.

17. A vehicle bump-avoiding system used to prevent a vehicle from rearward bump, characterized by that the designs of the eighth circuit are used to constitute said system.

18. A vehicle bump-avoiding device educating a driver with traffic safety knowledge when driving, characterized by that by means of an electricity-supplying device which auto-rotates to respectively provide every circuits with electricity for working, a talking device is made to speak out words about noticing the traffic safety so that the driver is educated with knowledge about traffic safety at common time to avoid bump.

19. A vehicle bump-avoiding system as claimed in claim 1, wherein the output 37 is additionally connected with a circuit 73 to make another timer circuit 74 calculate the time of the output 37, and if the time is calculated by the timer circuit 74 to reach a preset value, it is indicated that the vehicle is keeping getting closer to the remote vehicle and is very close to the remote vehicle, and at this time, the output circuit 74 will produce output 75 which makes the activating and delay circuit 76 work so as to produce a period of time of output 77, which makes the brake machine brake.

20. A vehicle bump-avoiding system as claimed in claim 19, wherein the output 75 goes through an on/off circuit 81 to thereafter make the activating and delay circuit 76 work, and the on/off circuit 81 is divided from the output 75 and is provided with electricity 82, 83 for working by the on/off circuit.

FIG. 1